# FASCICULE DE BREVET EUROPEEN

(11) **EP 4 399 603 B1**
(45) Date de publication et mention de la délivrance du brevet: **16.04.2025**
(21) Numéro de dépôt: 22764435.8
(22) Date de dépôt: 06.09.2022
(51) Int. Cl.: G06F 9/48, G06F 11/34, G06F 21/72

(54) **EXECUTION AMELIOREE D'UNE OPERATION DANS UN ELEMENT SECURISE**
VERBESSERTE AUSFÜHRUNG EINER OPERATION IN EINEM SICHEREN ELEMENT
IMPROVED EXECUTION OF AN OPERATION IN A SECURE ELEMENT

(30) Priorité: 09.09.2021 FR 2109437
(43) Date de publication de la demande: 17.07.2024
(73) Titulaire: IDEMIA France, 92400 Courbevoie (FR)
(72) Inventeur: DOS SANTOS, Elder, 92400 Courbevoie (FR); VUJCIC, Dragan, 92400 Courbevoie (FR)
(74) Mandataire: Idemia
(86) Numéro de dépôt international: PCT/EP2022/074771
(87) Numéro de publication internationale: WO 2023/036788

(56) Documents cités:
- CN-A- 102 053 917
- CN-A- 112 214 291
- LEE DONGKYU ET AL: "Scrambling Technique of Instruction Power Consumption for Side-Channel Attack Protection", 2020 INTERNATIONAL CONFERENCE ON ELECTRONICS, INFORMATION, AND COMMUNICATION (ICEIC), IEEE, 19 January 2020 (2020-01-19), pages 1 - 2, XP033752767, DOI: 10.1109/ICEIC49074.2020.9051111

## Description

### Domaine technique

La présente invention concerne, de façon générale, le domaine des éléments sécurisés et plus particulièrement la gestion de l'exécution de tâches ou opérations informatiques, telles que des traitements cryptographiques, dans des éléments sécurisés.

### Technique antérieure

L'ETSI (pour « European Telecommunications Standards Institute ») travaille actuellement sur les spécifications techniques des réseaux de 5^{ème} génération (5G).

La 5G prévoit notamment que chaque abonné à un service donné d'un réseau de communication, par exemple radio ou wifi (marque commerciale), ait un identifiant 5G unique au monde, noté SUPI (pour « SUbscriber Permanent Identifier »), embarqué dans un élément sécurisé, type carte SIM (pour « Subscriber Identity Module »).

Cet identifiant d'abonné inclut par exemple l'IMSI (pour « International Mobile Subscriber Identity ») qui est un identifiant unique alloué à chaque abonné mobile d'un réseau mobile GSM (2G), UMTS (3G) ou LTE (4G), ou le NAI (pour « NetworkAccess Identifier ») introduit par la RFC 4282.

Dans un souci d'amélioration de la sécurité, la spécification technique ETSI TS 133 501 V15.1.0 (2018-07) prévoit l'authentification de l'abonné, à l'aide de cet identifiant unique, à de multiples occasions, notamment au cours du processus d'authentification et d'échange de clés entre un équipement utilisateur hôte -et plus particulièrement l'élément sécurisé inséré ou soudé dans celui-ci- et le réseau, c'est-à-dire à chaque connexion au réseau.

Plus particulièrement, la spécification préconise un chiffrement de cet identifiant sur des courbes elliptiques, avant envoi au réseau.

Il est possible de prévoir, par exemple au cours de la personnalisation de l'élément sécurisé de l'équipement utilisateur hôte, un jeu d'identifiants pré-chiffrés à utiliser pour ces authentifications et ainsi se connecter au réseau. Cependant, la mémoire de l'élément sécurisé est limitée et il n'est pas possible de prévoir un nombre d'identifiants déjà chiffrés suffisant pour toutes les connexions qui auront lieu.

L'élément sécurisé doit donc nécessairement chiffrer régulièrement l'identifiant « à la volée ». Or, une telle opération de chiffrement, effectuée de manière logicielle, est coûteuse en termes de ressources de calcul, d'autant plus qu'elle est effectuée fréquemment. Aussi, elle accapare les ressources durant un long moment.

L'opération de chiffrement n'est qu'un exemple d'opérations couteuses en termes de ressources de calcul. Des opérations périodiques de nettoyage de la mémoire, connues sous l'appellation de « garbage collector » (ou ramasse miettes), sont également gourmandes en ressources de traitement.

D'une façon générale, un élément sécurisé est confronté à de nombreuses opérations qui accaparent les ressources de traitement pendant des durées longues.

Cette immobilisation des ressources de l'élément sécurisé réduit fortement la réactivité de l'élément sécurisé à des sollicitations de l'équipement utilisateur hôte ou du réseau de téléphonie mobile. Cette situation n'est donc pas adaptée à la 5G qui vise à adresser les besoins accrus d'applications complexes nécessitant une haute réactivité.

Il existe par conséquent un besoin d'améliorer la gestion de ce type d'opérations au sein des éléments sécurisés.

CN 112 214 291 A divulgue un procédé de gestion des tâches comprenant les étapes suivantes : exécution de chaque tâche de base en fonction du temps d'exécution prévu pour chaque tâche de base, et exécution d'une tâche fastidieuse dans le temps d'exécution prévu restant de la tâche de base dont le temps d'exécution réel est inférieur au temps d'exécution prévu.

CN 102 053 917 A divulgue un procédé d'une carte intelligente qui consiste à recevoir les instructions (APDU) envoyées par un serveur, et à déterminer si une carte intelligente est déjà occupée et si les instructions doivent être traitées immédiatement. Si les instructions doivent être traitées immédiatement, les ressources de la carte sont utilisées pour les exécuter. Dans le cas contraire, les instructions APDU sont mises en cache de la mémoire interne de la carte intelligente et sont traitées quand le carte n'est plus occupée.

EE DONGKYU ET AL: "Scrambling Technique of Instruction Power Consumption for Side-Channel Attack Protection", 2020 INTERNATIONAL CONFERENCE ON ELECTRONICS, INFORMATION, AND COMMUNICATION (ICEIC), IEEE, 19 janvier 2020 (2020-01-19), pages 1-2, DOI: 10.1109/ICEIC49074.2020.9051111 [extrait le 2020-03-30] divulgue une technique de brouillage de l'horloge pour masquer le temps d'exécution d'une opération exécutée dans un système embarqué. Le procédé protège les dispositifs embarqués contre les attaques par analyse du temps en rendant le temps d'exécution de l'instruction aléatoire.

### Exposé de l'invention

La présente invention a ainsi pour objet de pallier au moins un des inconvénients précités. Dans ce contexte, un premier aspect de l'invention concerne un procédé de gestion de l'exécution d'une opération principale par un élément sécurisé, le procédé étant caractérisé en ce que :
l'opération principale est formée d'une pluralité d'opérations élémentaires, et
le procédé comprend les étapes suivantes :
   a. recevoir, d'un équipement hôte, une commande au format Application Protocol Data Unit, APDU,
   b. déclencher un compteur temporel lors de l'exécution de la commande APDU afin de déterminer une durée réelle de traitement de la commande APDU par l'élément sécurisé;
   c. déterminer si la durée réelle de traitement indiquée par le compteur temporel est inférieure à une durée prédéfinie associée à la commande APDU ; et
   d. en cas de détermination positive, exécuter une ou plusieurs desdites opérations élémentaires pendant le temps restant de ladite durée prédéfinie.

Corrélativement, un deuxième aspect de l'invention concerne un élément sécurisé configuré pour exécuter une opération principale formée d'une pluralité d'opérations élémentaires, l'élément sécurisé comprenant un processeur configuré pour :
a. recevoir, d'un équipement hôte, une commande au format Application Protocol Data Unit, APDU,
b. déclencher un compteur temporel lors de l'exécution de la commande APDU afin de déterminer une durée réelle de traitement de la commande APDU par l'élément sécurisé ;
c. déterminer si la durée réelle de traitement indiquée par le compteur temporel est inférieure à une durée prédéfinie associée à la commande APDU ; et
d. en cas de détermination positive, exécuter une ou plusieurs desdites opérations élémentaires pendant le temps restant de ladite durée prédéfinie.

L'invention ainsi revendiquée permet d'améliorer la gestion des opérations mises en œuvre au sein des éléments sécurisés.

En effet, l'opération principale, par exemple gourmande en ressources de traitement, est réalisée par parties lors du temps restant après l'exécution de la commande APDU reçue.

Aussi, l'opération principale peut être réalisée en plusieurs fois au cours d'une pluralité d'itérations d'exécution de commandes APDU successives, sans pour autant avoir empêché la mise en œuvre d'autres traitements (commandes APDU) avant la fin de l'opération principale.

L'invention restaure ainsi un haut degré de réactivité de l'élément sécurisé.

Selon l'invention toujours, le procédé comprenant en outre une étape e. d'envoi d'une réponse à la commande APDU à destination de l'équipement hôte, postérieurement à l'étape d.

Dans un mode de réalisation particulier, la réponse à la commande est envoyée à l'expiration de la durée prédéfinie associée à la commande APDU.

En contrôlant l'instant d'émission de la réponse APDU vers l'équipement hôte, l'élément sécurisé allonge artificiellement le temps alloué au traitement de la commande APDU afin de permettre l'exécution d'opérations élémentaires à l'issue de ce traitement. Ce temps alloué correspond à la durée prédéfinie associée à la commande APDU.

Cet allongement contrôlé présente en outre des avantages sécuritaires. En effet, il permet de modifier (et donc cacher) le temps réel de traitement ou d'exécution d'une commande APDU, vu de l'extérieur de l'élément sécurisé, car ce temps est classiquement défini entre l'envoi de la commande et la réception de sa réponse. Les performances de traitement de l'élément sécurisé ne sont donc pas dévoilées ; une personne mal intentionnée n'est plus en mesure d'identifier le traitement effectivement mis en œuvre.

D'autres caractéristiques du procédé et de l'élément sécurisé selon des modes de réalisation de l'invention sont décrites dans les revendications dépendantes.

Dans un autre mode de réalisation, le compteur temporel est déclenché à réception de la commande APDU. Cela permet de suivre le temps d'exécution de la commande APDU comme vu depuis l'extérieur de l'élément sécurisé, afin par exemple de se conformer plus facilement à des durées maximales standardisées. Bien entendu, en variante, il pourrait être déclenché en même temps que l'exécution de la commande APDU par l'élément sécurisé, après sa réception.

Dans un autre mode de réalisation, le procédé comprend une pluralité d'itérations des étapes a. à d. de sorte à exécuter ladite pluralité d'opérations élémentaires formant l'opération principale. Toutes les opérations élémentaires peuvent être exécutées pendant les temps restants suite à l'exécution de plusieurs commandes APDU successives.

En variante, certaines des opérations élémentaires peuvent toutefois être exécutées par l'élément sécurisé entre la gestion de deux commandes APDU successives. Notamment, le procédé peut comprendre postérieurement à l'envoi d'une réponse à une commande APDU reçue et préalablement à la réception d'une commande APDU suivante, l'exécution additionnelle d'une ou plusieurs desdites opérations élémentaires. Aussi, dès que l'élément sécurisé n'est plus sollicité par des commandes APDU, il peut avancer l'exécution des opérations élémentaires composant les opérations principales à effectuer.

Dans un mode de réalisation particulier, l'exécution additionnelle d'une ou plusieurs desdites opérations élémentaires comprend l'exécution successive d'une ou plusieurs opérations élémentaires jusqu'à réception de la commande APDU suivante. En d'autres termes, l'élément sécurisé exécute des opérations élémentaires tant qu'aucune nouvelle commande APDU n'est reçue, qu'il doive traiter. Dans ce cas-là, il cesse le traitement des opérations élémentaires, et traite la nouvelle commande APDU reçue selon les étapes a. à d. ci-dessus.

Dans un mode de réalisation, l'opération principale est prédécoupée en ladite pluralité d'opérations élémentaires, chacune étant associée à une durée de traitement élémentaire, et
l'étape d. comprend la sélection des une ou plusieurs desdites opérations élémentaires à exécuter en fonction de leurs durées de traitement élémentaire associées et dudit temps restant.

Dans ce mode, les opérations élémentaires sont connues à l'avance et donc prédéfinies, avec leurs coûts (durées de traitement théoriques) associés. Lorsque du temps restant s'avère disponible après exécution d'une commande APDU, l'élément sécurisé peut alors piocher, préférentiellement dans un ordre logique, des opérations élémentaires qu'il peut exécuter pendant ce temps restant, compte tenu du coût temporel de chaque opération élémentaire.

Cela rend possible l'exécution « simultanée » de plusieurs opérations principales. Dans ce cas, l'étape d. peut comprendre l'exécution d'au moins deux opérations élémentaires provenant d'au moins deux opérations principales distinctes. En effet, l'élément sécurisé peut piocher des opérations élémentaires de plusieurs opérations principales afin d'optimiser l'utilisation du temps restant après exécution de la commande APDU.

Dans un mode de réalisation autre que celui du découpage de l'opération principale (gourmande en ressources), l'étape d. comprend la poursuite d'une exécution de l'opération principale depuis un point de suspension précédent (initialement le début de l'opération), ladite exécution de l'opération principale étant suspendue à un point de suspension suivant qui est fonction du temps restant.

Dans ce cas, on ne découpe pas l'opération principale a priori mais elle est progressivement exécutée en continuant, par suspensions successives, son exécution. Cette exécution est donc reprise à l'issue de l'exécution de la commande APDU, pour le temps restant, puis est suspendue à nouveau à la fin du temps restant, préférentiellement à un point de suspension ne compromettant pas l'exécution globale de l'opération principale.

Aussi, le point de suspension dit « précédent » lors d'une nouvelle itération des étapes a. à d. peut être le point de suspension dit « suivant » résultant de la dernière itération des étapes a. à d. Bien entendu, si l'élément sécurisé venait à exécuter une partie de l'opération principale entre le traitement de deux commandes APDU, le point de suspension « précédent » lors d'une nouvelle itération des étapes a. à d. serait le point où cette exécution aurait été arrêté lors de la réception de la nouvelle commande APDU à traiter.

Les avantages, buts et caractéristiques particulières de l'élément sécurisé sont similaires à ceux du procédé précité. Un système peut comprendre l'élément sécurisé et un équipement hôte dudit élément sécurisé.

Dans un mode particulier de réalisation, les différentes étapes du procédé précité sont déterminées par des instructions de programmes d'ordinateur.

En conséquence, l'invention vise aussi un support non transitoire lisible par ordinateur stockant un programme d'ordinateur qui, lorsqu'il est exécuté par un élément sécurisé muni d'un processeur, amène l'élément sécurisé à effectuer le procédé tel que défini ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'information peut être n'importe quelle entité ou dispositif capable de stocker le programme. Par exemple, le support peut comprendre un moyen de stockage, tel qu'une ROM, par exemple une ROM de microcircuit, ou encore un moyen d'enregistrement magnétique, par exemple un disque dur, ou encore une mémoire flash.

Alternativement, le support d'information peut être un circuit intégré dans lequel le programme est incorporé, le circuit étant adapté pour exécuter ou pour être utilisé dans l'exécution du procédé en question.

### Brève description des dessins

D'autres particularités et avantages de l'invention apparaîtront encore dans la description ci-après, illustrée par les figures ci-jointes qui en illustrent des exemples de réalisation dépourvus de tout caractère limitatif.
[Fig. 1] La Figure 1 représente, schématiquement, un élément sécurisé dans lequel la présente invention peut être mise en œuvre.
[Fig. 2] La Figure 2 illustre, de façon schématique, des modules fonctionnels de l'élément sécurisé pour une mise en œuvre de l'invention.
[Fig. 3] La Figure 3 illustre, à l'aide d'un ordinogramme, des étapes générales d'un procédé conforme à l'invention.
[Fig. 4] La Figure 4 illustre, à l'aide d'un ordinogramme, des étapes générales d'un procédé alternatif conforme à l'invention.
[Fig. 5] La Figure 5 illustre un séquencement chronologique du traitement de plusieurs commandes APDU successives alors que des opérations principales sont à traiter, conforme à des mises en œuvre de l'invention.

### Description détaillée

Un élément sécurisé, SE (pour « secure element » en langue anglo-saxonne), est un composant ou plate-forme matérielle inviolable (typiquement une puce ou une carte à puce) utilisée dans un dispositif ou terminal hôte (typiquement un terminal mobile) et capable d'héberger, de façon sûre sous le contrôle d'un système d'exploitation de carte, des applications et des données en conformité avec des règles et des exigences de sécurité fixées par des autorités de confiance. Les éléments sécurisés sont notamment utilisés pour des traitements cryptographiques à des fins d'identification, authentification, signature, etc.

Un facteur de forme largement utilisé du SE est l'élément sécurisé embarqué ou intégré, eSE (pour « embedded Secure Element »). Cet élément sécurisé embarqué est généralement soudé au terminal hôte.

Les éléments sécurisés sont programmés selon les applications souhaitées.

A titre d'exemple, un eSE peut former l'élément sécurisé nécessaire à de nombreux usages ou services reposant sur une communication NFC (pour « Near Field Communication » en langue anglo-saxonne) mis en œuvre par un terminal mobile hôte. Par exemple, un service de paiement NFC nécessite des informations bancaires secrètes de l'utilisateur qui sont avantageusement stockées dans l'eSE, à l'abri de tout accès intempestif. C'est aussi le cas d'un service de transport public où l'eSE permet d'identifier l'utilisateur auprès de portiques.

Un autre exemple d'élément sécurisé est l'UICC embarquée (pour « Universal Integrated Circuit Card ») qui procure les références d'un abonné pour s'authentifier sur un réseau de téléphonie mobile. Il s'agit par exemple d'un eSE configuré comme une carte SIM (pour « Subscriber Identity Module » - ou module d'identité d'abonné). On parle alors d'eUICC (pour « embedded Universal Integrated Circuit Card »).

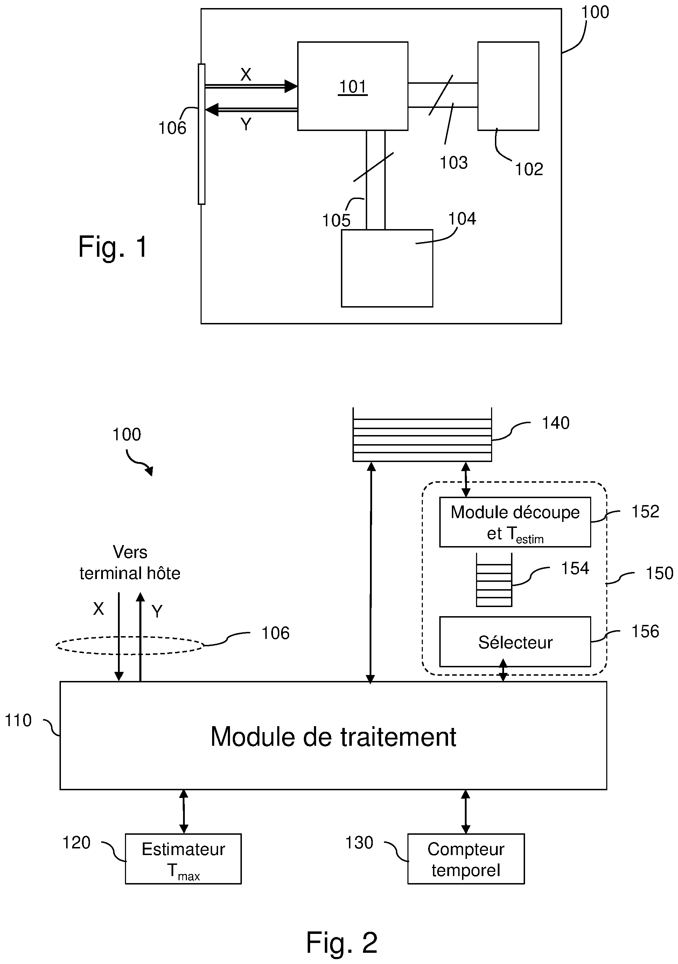

La Figure 1 représente, schématiquement, un élément sécurisé 100 dans lequel la présente invention peut être mise en œuvre. Cet élément sécurisé 100 comprend un microprocesseur 101, auquel sont associées d'une part une ou plusieurs mémoires vives 102 (par exemple de type RAM, pour « Random Access Memory »), par exemple au moyen d'un bus 103, et d'autre part une ou plusieurs mémoires non volatiles 104 (par exemple du type ROM (pour « Read Only Memory ») et/ou EEPROM (pour « Electrically Erasable Programmable Read Only Memory ») et/ou flash), par exemple à travers un bus 105. La mémoire de stockage non volatile 104 stocke des données et logiciels destinés à mettre en œuvre l'invention mais également toute donnée nécessaire à l'exécution des programmes. La mémoire volatile de travail 102 stocke le code exécutable des programmes informatiques ainsi que les registres adaptés pour enregistrer des variables et des paramètres nécessaires à leur exécution.

Les bus 103 et 105 peuvent être un seul et même bus. Le microprocesseur 101 peut être un cryptoprocesseur sécurisé.

L'élément sécurisé 100 comporte en outre, reliées au(x) bus, une ou plusieurs interfaces de communication 106 avec le terminal hôte (non représenté) embarquant l'élément sécurisé.

L'interface de communication 106 est réalisée par exemple au moyen de contacts pourvus sur l'élément sécurisé (typiquement une carte à puce) conformes à la norme ISO 7816 et/ou au moyen d'une antenne radiofréquence (sans contact) conforme à la norme ISO 14443.

L'élément sécurisé 100 communique, via l'interface de communication 106, avec un lecteur de carte (conforme à la norme ISO 7816 et/ou 14443) équipant le terminal hôte, typiquement dans un schéma maître-esclave où le lecteur est maître. Aussi, le lecteur du terminal hôte envoie une commande X, typiquement au format APDU (pour « Application Protocol Data Unit »), et reçoit en retour une réponse Y, typiquement au format APDU, qui est le résultat de l'exécution de la commande X. Une telle commande est nommée ci-après « commande APDU ».

Une commande APDU est également connue sous l'appellation d'instruction APDU en raison de la présence d'un code d'instruction « INS » dans la commande.

En pratique, le lecteur ne peut envoyer une nouvelle commande APDU qu'après avoir reçu une réponse à la commande APDU précédente.

L'élément sécurisé 100 peut être un eSE (« embedded SE »), une eUICC (« embedded Universal Integrated Circuit Card »), une eSIM (« embedded SIM »), destiné à être intégré, par soudage par exemple, à un terminal hôte tel qu'un téléphone intelligent (smartphone), une tablette numérique, un ordinateur portable, un assistant personnel, un dispositif de divertissement (e.g. console de jeu).

La Figure 2 illustre, de façon schématique, des modules fonctionnels de l'élément sécurisé 100 pour une mise en œuvre de l'invention. Bien entendu, des fonctions additionnelles non représentées peuvent exister, comme il ressortira de la description qui suit.

L'élément sécurisé 100 comprend un module de traitement ou d'exécution 110, un estimateur de durée allouée par commande APDU 120, un compteur temporel 130, une pile ou buffer de tâches/opérations principales 140 et optionnellement un gestionnaire de sous-tâches ou « opérations élémentaires » 150. Ce gestionnaire 150 comprend un module de découpe et d'estimation de temps de traitement 152, une pile ou buffer d'opérations élémentaires 154 et un sélecteur d'opérations élémentaires 156. Une pile ou buffer est une zone mémoire stockant temporairement des données. Elle peut être de type FIFO (pour « first in, first out »).

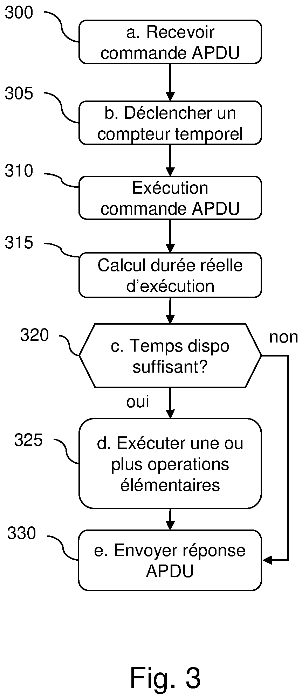

Le module de traitement ou d'exécution 110 pilote un procédé de gestion de l'exécution d'une opération principale stockée dans la pile 140 conformément à l'invention. Typiquement, il peut mettre en œuvre les opérations de la Figure 3 décrite ci-après.

Le module de traitement 110 est reliée à l'interface de communication 106 aux fins de recevoir des commandes APDU X du terminal hôte, d'exécuter ces commandes et de fournir en retour des réponses APDU Y.

Le module de traitement 110 peut solliciter l'estimateur de durée 120 aux fins d'obtenir une durée allouée pour une commande APDU X reçue.

L'estimateur de durée 120 peut de façon simple comprendre une table de correspondance associant une durée allouée Tₘₐₓ à une commande APDU ou un type de commande APDU. A titre d'exemple, une même durée allouée Tₘₐₓ peut être prévue pour l'ensemble des commandes APDU. En variante, une durée allouée Tₘₐₓ différente peut être définie pour chaque type de commande APDU, typiquement par code d'instruction « INS » (18 codes différents sont définis dans la partie 3 du standard ISO/IEC 7816, par exemple « read binary », « read record », « write binary », « open channel », « select file », « external authenticate », etc.). Bien entendu, d'autres définitions de « type de commande APDU » peuvent être envisagés, comme par exemple les quatre structures de commandes APDU différentes (format court, format orienté écriture, format orienté lecture, format complet).

La durée allouée Tₘₐₓ peut être définie par rapport à un temps de réponse maximal défini dans la norme ISO/IEC 7816 (voir par exemple section 10.5.3.2 de la norme ISO/IEC 7816-3). Tₘₐₓ peut être égal à ce temps de réponse maximal ou à un pourcentage de celui-ci, par exemple 70% ou 80%. Le pourcentage peut varier d'un type de commande APDU à l'autre, voire d'une commande APDU à l'autre.

En variante, la durée allouée Tₘₐₓ peut être calculée à partir d'un temps moyen d'exécution d'une commande APDU, d'un type de commande APDU ou de l'ensemble des commandes APDU. Tₘₐₓ peut être égal à ce temps de réponse moyen augmenté d'un pourcentage, par exemple 10%, 15%, 20%, 25% voire 50%. Le pourcentage peut varier d'un type de commande APDU à l'autre, voire d'une commande APDU à l'autre. Le temps moyen peut être déterminé de façon préalable ou au cours de la vie de l'élément sécurisé.

L'estimateur de durée 120 peut également comprendre un sous-module d'apprentissage visant à ajuster ou mettre à jour la durée allouée Tₘₐₓ dans le temps, notamment en fonction des durées réelles d'exécution des commandes APDU que l'élément sécurisé 100 exécute. L'apprentissage est réalisé avec la même granularité que l'affectation des durées allouées aux commandes APDU, à savoir par commande APDU, par type de commande APDU ou de façon globale pour l'ensemble des commandes APDU.

Une des durées Tₘₐₓ définies ci-dessus peut être utilisée comme durée initiale.

Une moyenne des durées réelles d'exécution (éventuellement incluant la durée initiale) augmentée d'un pourcentage, par exemple 10%, 15%, 20%, 25% voire 50%, peut définir la durée allouée Tₘₐₓ pour la commande APDU suivante (ou le type de commande APDU, ou l'ensemble des commandes APDU). En variante à l'utilisation de la moyenne, la durée réelle d'exécution maximale peut être utilisée (selon la granularité retenue).

La mise à jour des durées allouées Tₘₐₓ peut être réalisée à chaque commande APDU X traitée, ou après un nombre prédéfini de commandes APDU traitées (éventuellement identiques ou du même type), ou de façon périodique.

Cet apprentissage permet de « profiler » l'estimateur 120 aux caractéristiques de l'élément sécurisé 100.

En variante à l'apprentissage autonome, les durées allouées Tₘₐₓ peuvent être mise à jour (périodiquement ou à la demande) par transfert à distance (over-the-air ou OTA) notamment lorsque le terminal hôte est un terminal de communication mobile, ou par fichier chargé directement par le terminal hôte dans l'élément sécurisé 100.

Le module de traitement 110 peut solliciter le compteur temporel 130 aux fins de mesurer la durée réelle d'exécution ou de traitement d'une commande APDU X reçue.

Le compteur temporel 130 est typiquement relié à la ligne horloge CLK de l'élément sécurisé, laquelle est généralement fournie par le terminal hôte.

Le compteur temporel 130 peut être déclenché à la réception d'une nouvelle commande APDU X. En variante, il peut être déclenché uniquement lorsque le module de traitement 110 commence à lire la commande (donc l'entête « CLA », « INS », « P1 » et « P2 » suivi du corps « Lc », « DATA », « Le ») .

Le compteur temporel 130 est arrêté lorsque le résultat d'exécution est obtenu par le module de traitement 110 ou que la réponse APDU Y est prête à être transmise. Dans les deux cas, la réponse APDU Y n'a pas encore été transmise au terminal hôte.

Comme décrit par la suite, la durée mesurée par le compteur temporel 130 permet au module de traitement 110 de savoir aisément s'il reste du temps de traitement disponible au regard de la durée Tₘₐₓ allouée à la commande APDU traitée. Ce temps disponible permet d'avancer partiellement l'exécution d'une opération principale stockée dans le buffer 140.

Comme décrit plus haut, cette durée mesurée permet également, dans certains modes de réalisation, de mettre à jour la durée Tₘₐₓ allouée à cette commande APDU (ou à un type de commande particulier, voire à l'ensemble des commandes APDU).

Le buffer 140 est une zone mémoire dans laquelle l'élément sécurisé 100 stocke des opérations qu'il souhaite réaliser lorsque des ressources de traitement sont disponibles. Typiquement, une routine de l'élément sécurisé 100 vient y stocker les opérations gourmandes en ressources.

A titre d'exemple, la génération d'identifiants chiffrés, par exemple SUPI ou IMSI, monopolise le microprocesseur 101 pour une durée longue. Un pool d'identifiants chiffrés (selon des techniques classiques) peut être présent dans l'élément sécurisé 100 pour faciliter les opérations d'authentification auprès d'un réseau de communication mobile. Tout identifiant chiffré utilisé est supprimé du pool. Une routine peut alors s'assurer que le pool contient en permanence au moins N identifiants chiffrés. Aussi, lorsque ce nombre tombe à N, la routine peut lancer une opération de génération de M nouveaux identifiants chiffrés. Cette opération est enregistrée dans le buffer 140. De façon similaire, des opérations de chiffrement, de déchiffrement, de signature... peuvent être composées de multiples opérations élémentaires.

Dans un autre exemple, les opérations, par exemple périodiques, de ramasse-miettes (en anglais « garbage collector » ou GC) responsable du recyclage de la mémoire préalablement allouée puis inutilisée peuvent être indiquées dans le buffer 140.

Ces opérations dites « principales » sont généralement composées d'une pluralité de tâches ou opérations élémentaires. Par exemple, le chiffrement d'un identifiant est un chiffrement par morceau ou bloc : le chiffrement de chaque bloc composant l'identifiant peut être assimilé à une opération élémentaire. De même, le ramasse-miettes peut traiter la mémoire par bloc ou zone : le nettoyage de chaque zone composant la mémoire à nettoyer peut être assimilé à une opération élémentaire. Plus généralement, une opération principale est une suite d'opérations ou étapes qui peuvent être réalisées progressivement.

Un environnement d'exécution préemptif (dans l'élément sécurisé) est en particulier capable de suspendre l'exécution d'une opération et de la reprendre ultérieurement. Cette suspension peut par exemple être réalisée à la frontière de chaque opération élémentaire ou étape constituant l'opération principale. Plus généralement, des points de suspension peuvent être identifiés dans ces opérations principales, là où l'exécution peut être interrompue et suspendue sans dommage pour l'exécution dans sa globalité (notamment sans impact sur le résultat final de l'exécution). La suspension peut optionnellement requérir l'enregistrement d'un environnement d'exécution (registres, paramètres ou valeurs intermédiaires).

Aussi, le gestionnaire d'opérations élémentaires 150 peut, à l'aide du module de découpe et d'estimation de temps de traitement 152, convertir une opération principale du buffer 140 en une pluralité d'opérations élémentaires à exécuter. Dans les exemples ci-dessus, il s'agit notamment de définir plusieurs opérations élémentaires pour le chiffrement de tous les blocs d'un identifiant à chiffrer, ou de définir plusieurs opérations élémentaires pour le nettoyage de toutes les zones mémoires.

Le module 152 estime par ailleurs un temps de traitement nécessaire pour chaque opération élémentaire obtenue. De façon similaire au module 120, une table de correspondance peut être prévue qui associe un temps Tₑₛₜᵢₘ à chaque opération élémentaire (ou type d'opération élémentaire). Un temps par défaut peut être prévu pour toute opération non référencée. Un apprentissage dans le temps peut permettre d'affiner ces temps, voire de les définir pour les opérations non initialement référencées. Dans ce cas, le compteur temporel 130 peut être utilisé pour calculer la durée réelle d'exécution de chaque opération élémentaire.

Cet apprentissage permet de « profiler » l'estimateur 152 aux caractéristiques de l'élément sécurisé 100.

Selon les techniques de découpe de l'opération principale, les opérations élémentaires peuvent avoir des tailles (au sens quantité de traitement nécessaire) différentes et donc être associées à des durées estimées de traitement Tₑₛₜᵢₘ différentes.

Le buffer d'opérations élémentaires 154 stocke ces opérations élémentaires à exécuter, avec leur temps estimé Tₑₛₜᵢₘ associé. Préférablement, il les stocke dans un ordre logique d'exécution correspondant à leur ordre dans l'opération principale. Cela peut être nécessaire si certaines opérations élémentaires utilisent le résultat d'opérations élémentaires précédentes. Pour garantir que la sélection des opérations élémentaires respecte cet ordre, le buffer 154 peut être de type FIFO (pour « First In, First Out », premier entré, premier sorti). Une FIFO peut être prévue par opération principale en cas de pluralité de telles opérations principales.

Dans un mode de réalisation, le buffer 154 stocke simultanément des opérations élémentaires de deux ou plus opérations principales. Cela permet de réaliser simultanément l'exécution progressive de plusieurs opérations principales.

Le module de traitement 110 peut alors solliciter le sélecteur d'opérations élémentaires 156 pour choisir quelles opérations élémentaires exécuter lorsque du temps de traitement est disponible dans une mise en œuvre de l'invention.

Typiquement, le module de traitement 110 indique au sélecteur 156 un temps disponible T_{dispo}. Le sélecteur 156 peut ainsi sélectionner des opérations élémentaires en fonction de leurs temps estimés propres Tₑₛₜᵢₘ et du temps disponible T_{dispo}.

Si le temps alloué Tₘₐₓ comprend le temps d'envoi Tₑₙᵥₒᵢ de la réponse APDU Y, le temps disponible T_{dispo} est réduit de ce temps Tₑₙᵥₒᵢ avant sélection des opérations élémentaires. Le temps d'envoi Tₑₙᵥₒᵢ peut en variante être négligeable.

Typiquement, le sélecteur 156 sélectionne un nombre maximal d'opérations élémentaires dont la somme des temps de traitement estimés correspondant ne dépasse pas le temps disponible : somme(Tₑₛₜᵢₘ) ≤ T_{dispo}.

Lors d'une opération de sélection pour un temps disponible T_{dipso} , le sélecteur 156 peut sélectionner des opérations élémentaires associées à une seule opération principale. En variante, le sélecteur 156 peut sélectionner des opérations élémentaires associées à une seconde opération principale uniquement s'il n'y a plus d'opération élémentaire à exécuter pour une première opération principale. En variante encore, le sélecteur 156 peut sélectionner des opérations élémentaires associées à deux ou plus opérations principales.

Le sélecteur 156 peut respecter l'ordre des opérations élémentaires dans la ou les opérations principales, et ainsi ne sélectionner que le ou les premiers éléments (opérations élémentaires) dans le ou les buffers FIFO.

Les opérations principales peuvent optionnellement être associées à des priorités. Le sélecteur 156 peut alors sélectionner le maximum d'opérations élémentaires de l'opération principale ayant la plus haute priorité qui satisfont T_{dispo}, puis sélectionner le maximum d'opérations élémentaires de l'opération principale suivante ayant la plus haute priorité qui satisfont le temps restant (T_{dispo} réduit des temps estimés pour les opérations élémentaires déjà sélectionnées), et ainsi de suite.

La Figure 3 illustre, à l'aide d'un ordinogramme, des étapes générales d'un procédé conforme à l'invention. Ces étapes sont pilotées par le module de traitement 110.

A l'étape 300, le module de traitement 110 reçoit une commande APDU X du terminal hôte.

A l'étape 305, le module de traitement 110 déclenche le compteur temporel 130 lors de l'exécution de la commande APDU afin de déterminer une durée réelle de traitement de la commande APDU. Comme indiqué précédemment, ce déclenchement peut être en réaction à la réception 300 de la commande APDU ou être concomitant avec le début de l'exécution 310 de la commande APDU.

A l'étape 310, le module de traitement 110 exécute la commande APDU X selon des mécanismes classiques. Par exemple, pour une commande « read binary », il s'agit d'aller lire des octets d'un fichier en mémoire. Pour une commande « write binary », il s'agit d'écrire des octets dans un fichier en mémoire.

L'exécution de la commande APDU se termine lorsque l'opération sollicitée a été réalisée et que le résultat (e.g. écriture effectuée ou octets lus) a été obtenu, et optionnellement lorsque la réponse APDU Y comprenant ce résultat est prête à l'envoi.

L'étape 315 se produit à cet instant de fin d'exécution, par l'arrêt du compteur temporel 130 et ainsi l'obtention de la durée réelle T_{execution} de traitement de la commande APDU X.

A l'étape 320, le module de traitement 110 récupère de l'estimateur 120 la durée Tₘₐₓ allouée au traitement de cette commande APDU X. Dans un mode de réalisation, cette durée définit l'instant auquel le module de traitement 110 va renvoyer la réponse APDU Y et ainsi clore le traitement de la commande APDU X vu de l'extérieur (i.e. du terminal hôte).

Une fois la durée Tₘₐₓ récupérée, le module de traitement 110 la compare à la durée d'exécution de la commande T_{execution}. Notamment, il détermine si la durée réelle de traitement indiquée par le compteur temporel (donc T_{execution}) est inférieure à la durée prédéfinie Tₘₐₓ associée à la commande APDU, ceci afin de déterminer s'il reste du temps de traitement disponible T_{dispo}: T_{dispo} = Tₘₐₓ - T_{execution}.

Dans la négative (pas de temps disponible), le module de traitement 110 envoie la réponse APDU Y à destination de l'équipement hôte à l'étape 330.

Dans l'affirmative (temps disponible), le module de traitement 110 exécute une ou plusieurs desdites opérations élémentaires pendant le temps restant T_{dispo} de ladite durée prédéfinie Tₘₐₓ.

Dans un mode de réalisation où les opérations principales sont prédécoupées en pluralités d'opérations élémentaires par le module 152, le module de traitement 110 sollicite le sélecteur 156 en lui indiquant la durée disponible T_{dispo} aux fins d'obtenir la ou les opérations élémentaires à exécuter. Des mécanismes de sélection des opérations élémentaires sont décrits plus haut en lien avec la Figure 2. Notamment, le sélecteur 156 sélectionne une ou plusieurs desdites opérations élémentaires à exécuter en fonction de leurs durées de traitement élémentaire associées Tₑₛₜᵢₘ et dudit temps T_{dispo} restant après l'exécution de la commande APDU.

La sélection et donc l'exécution qui s'ensuit peuvent comprendre la sélection et l'exécution d'opérations élémentaires provenant d'opérations principales distinctes.

L'étape 325 consiste alors à exécuter ces opérations élémentaires sélectionnées et retournées par le sélecteur 156.

Le compteur temporel 130 peut être utilisé à cette occasion pour mesurer la durée réelle d'exécution de chacune des opérations élémentaires, aux fins notamment d'ajuster, si besoin est, le temps estimé Tₑₛₜᵢₘ pour ces opérations élémentaires.

A noter que si le sélecteur 156 indique qu'il n'y a pas d'opération élémentaire à exécuter (soit le buffer 154 est vide, soit aucune opération élémentaire en sortie de buffer FIFO ne satisfait la durée disponible - Tₑₛₜᵢₘ > T_{dispo}), le procédé peut directement passer à l'étape 330.

Dans un autre mode de réalisation, sans découpage préalable des opérations principales, l'étape 325 peut consister à poursuivre, pendant le temps disponible T_{dispo}, l'exécution d'une opération principale précédemment suspendue.

Si aucune opération principale n'a encore été partiellement exécutée (et donc suspendue), l'étape 325 consiste à entamer l'exécution d'une opération principale stockée dans le buffer 140, par exemple l'opération principale ayant la plus haute priorité.

Dès lors qu'une opération principale a déjà partiellement été exécutée, l'étape peut consister à poursuivre l'exécution de cette opération principale depuis un point de suspension précédent. L'exécution de l'opération principale est réalisée pendant le temps disponible T_{dispo}, c'est-à-dire qu'elle est suspendue à nouveau à un point de suspension suivant qui est fonction du temps restant T_{dispo}. Ainsi, une ou plusieurs opérations élémentaires au sein de l'opération principale auront été exécutées.

Lors de la suspension, le nouveau point de suspension est mémorisé, ainsi que d'éventuelles données ou valeurs de registre nécessaires à la reprise de l'exécution. Lors de cette reprise (donc à une étape 325 ultérieure), les données ou valeurs sont alors restaurées.

Suite à l'étape 325 d'exécution d'opérations élémentaires, l'étape 330 consiste pour l'élément sécurisé 100 à envoyer la réponse APDU Y à destination de l'équipement hôte. On voit que cet envoi est postérieur à l'étape 325 d'exécution des opérations élémentaires. De préférence, la réponse APDU Y est envoyée à l'expiration de la durée prédéfinie Tₘₐₓ associée à la commande APDU. En décalant l'envoi de cette réponse à la fin de la durée Tₘₐₓ on prolonge artificiellement la durée d'exécution de la commande APDU, vue de l'extérieur (terminal hôte). De la sorte, aucune autre commande APDU n'est reçue du terminal hôte pendant la période Tₘₐₓ. Cela permet en définitive à l'élément sécurisé de toujours pouvoir exécuter (progressivement) une opération principale sans bloquer le traitement de commande APDU mais également sans être bloqué par une série continue de commandes APDU.

Il est à noter que le procédé de la Figure 3 peut être mis en œuvre à la réception de toute nouvelle commande APDU. Dans ce cas, la gestion de l'exécution d'une opération principale par l'élément sécurisé 100 comprend une pluralité d'itérations des étapes ci-dessus de sorte à exécuter (progressivement) la pluralité d'opérations élémentaires formant l'opération principale.

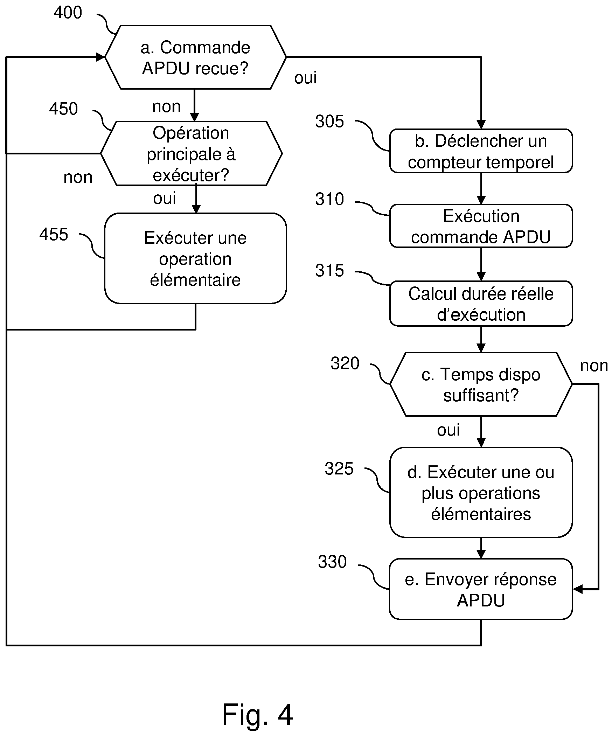

La Figure 4 illustre, à l'aide d'un ordinogramme, un autre mode de réalisation d'un procédé conforme à l'invention. Dans ce mode de réalisation, une ou plusieurs opérations élémentaires peuvent être exécutées entre le traitement de deux commandes APDU vues du terminal hôte. En d'autres termes, l'exécution additionnelle d'une ou plusieurs desdites opérations élémentaires est réalisée postérieurement à l'envoi d'une réponse à une commande APDU reçue et préalablement à la réception d'une commande APDU suivante.

Ce mode de réalisation illustre également les itérations successives (via la flèche depuis l'étape 330 vers l'étape 400) de traitement de commandes APDU reçues afin d'exécuter progressivement une opération principale.

A l'étape 400, le module de traitement 110 détermine si une commande APDU a été reçue.

Dans l'affirmative, les étapes 305 à 330 décrites ci-dessus sont mises en œuvre, étant noté que s'il n'existe aucune opération principale à exécuter, l'étape 325 est réduite à ne rien faire, et la réponse APDU Y peut être transmise, lors de l'étape 330, directement après l'exécution de la commande, c'est-à-dire sans attendre la fin de la durée allouée temps Tₘₐₓ. En d'autres termes, une durée allongée Tₘₐₓ est allouée à une commande APDU par l'estimateur 120 uniquement lorsqu'il y a une ou plusieurs opérations principales à exécuter.

Dans la négative, le module de traitement 110 détermine à l'étape 450 s'il existe une opération principale à exécuter, qu'elle ait déjà été exécutée partiellement (et donc suspendue) ou non. Cela revient par exemple à vérifier si le buffer 140 ou 154 est vide ou non.

Dans la négative, le procédé retourne à l'étape 400. Aussi, tant qu'aucune commande APDU ou opération principale n'est reçue, le module de traitement 110 n'effectue aucun traitement.

Dans l'affirmative du test 450, le module de traitement 110 exécute, à l'étape 455, une opération élémentaire de façon similaire à ce qui est décrit ci-dessus pour l'étape 325 pour une ou plusieurs opérations élémentaires.

En cas de découpage de l'opération principale, l'étape 455 consiste à récupérer la première opération élémentaire du buffer 154 et à l'exécuter.

En l'absence de découpage, l'étape 455 peut consister à reprendre l'exécution de l'opération principale depuis le dernier point de suspension et de la continuer jusqu'au prochain point de suspension possible.

Suite à cette exécution, le procédé retourne à l'étape 400. Cela permet de vérifier si une nouvelle commande APDU est reçue dans l'intervalle.

Bien entendu, l'étape 455 peut prévoir l'exécution de N (deux ou plus) opérations élémentaires, au lieu d'une seule, ou la continuation de l'exécution jusqu'au N^{ème} (deuxième ou plus) prochain point de suspension en avant, avant de retourner à l'étape 400.

Si une commande APDU est reçue pendant l'exécution 455, l'élément sécurisé 100 peut indiquer au terminal hôte qu'il traitera la commande un peu plus tard.

L'homme du métier connaît des standards des mécanismes permettant de fournir cette indication. A titre d'exemple, l'élément sécurisé peut renvoyer un statut (status word) 9300 indiquant un état occupé (busy). En variante, il peut renvoyer un octet de procédure (Procedure Byte) de type « NULL » (valeur '60'). En variante encore, il peut utiliser la commande proactive « MORE TIME » via une ou plusieurs séquences 91xx/FETCH/MORE TIME/Terminal Response[9000/91xx].

L'élément sécurisé peut alors exécuter la commande APDU après la prolongation du temps.

De façon préférée, l'élément sécurisé renvoyant cette indication comme réponse à la commande APDU, attend que le terminal hôte renvoie à nouveau la commande APDU, laquelle commande sera prise en compte lors de la prochaine étape 400 (sans que l'élément sécurisé ne sollicite une nouvelle prolongation du temps).

Le bouclage des étapes 400-450-455 permet l'exécution successive d'une ou plusieurs opérations élémentaires jusqu'à réception d'une nouvelle commande APDU.

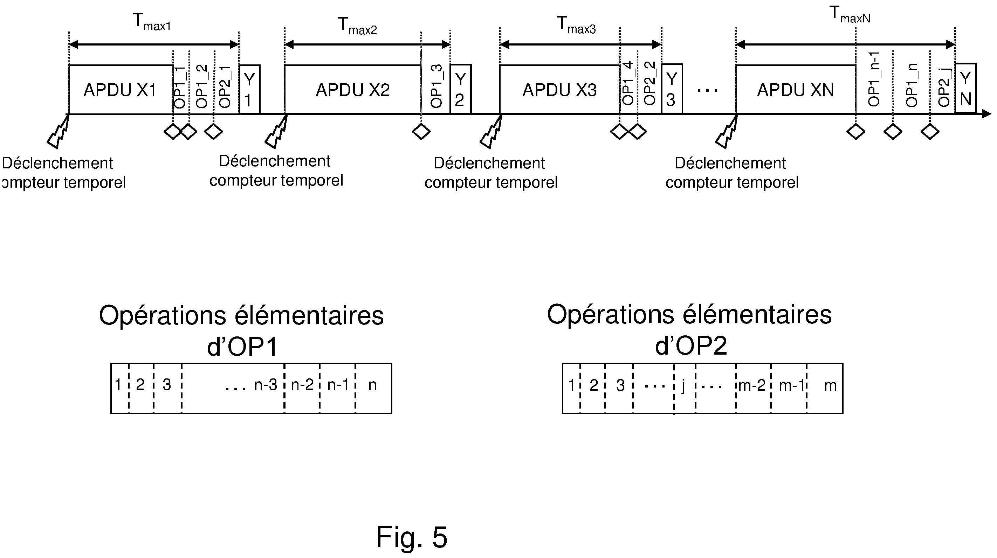

La Figure 5 illustre un séquencement chronologique du traitement de plusieurs commandes APDU successives alors que deux opérations principales OP1 et OP2 demandent à être traitées, par exemple deux chiffrements d'identifiant, deux opérations de ramasse-miettes (sur deux zones mémoires différentes) ou deux opérations de natures différentes.

Bien que les deux opérations principales soient ici à exécuter en même temps, l'une peut apparaître ultérieurement à l'autre.

Les deux opérations principales OP1 et OP2 sont représentées en bas de la figure comme étant formées respectivement de n et m opérations élémentaires. Ces opérations élémentaires sont par exemple stockées dans deux buffers FIFO 154.

A réception d'une commande APDU X1 (étape 300), l'élément sécurisé 100 obtient le temps Tₘₐₓ₁ associé, déclenche le compteur 130 (étape 305), exécute la commande APDU X1 (étape 310) sans envoyer la réponse APDU Y1, puis calcule le temps restant disponible T_{dispo} (étapes 315, 320). Dans l'exemple, le temps disponible permet au sélecteur 156 de sélectionner les opérations élémentaires 1 et 2 d'OP1 (OP1_1 et OP1_2) et l'opération élémentaire 1 de OP2, notée OP2_1 (car par exemple l'opération élémentaire 3 d'OP1 nécessitet un temps Tₑₛₜᵢₘ supérieur au temps restant).

Ces trois opérations élémentaires sont alors exécutées (étape 325). A l'expiration du temps alloué Tₘₐₓ₁, l'élément sécurisé 100 envoie la réponse APDU Y1 à la commande APDU X1.

Puis une deuxième commande APDU X2 est reçue (étape 300), l'élément sécurisé 100 obtient le temps Tₘₐₓ₂ associé, déclenche le compteur 130 (étape 305), exécute la commande APDU X2 (étape 310) sans envoyer la réponse APDU Y2 correspondante, puis calcule le temps restant disponible T_{dispo} (étapes 315, 320). Dans l'exemple, le temps disponible T_{dispo} permet au sélecteur 156 de sélectionner une seule opération élémentaire (l'opération élémentaire 3 d'OP1, notée OP1_3). Cette opération élémentaire est alors exécutée (étape 325). A l'expiration du temps alloué Tₘₐₓ₂, l'élément sécurisé 100 envoie la réponse APDU Y2 à la commande APDU X2.

Les mêmes étapes sont réalisées pour la commande APDU X3 et les suivantes. Ainsi, progressivement les opérations élémentaires de OP1 et OP2 sont exécutées.

Arrive la commande APDU XN (étape 300). L'élément sécurisé 100 obtient le temps T_{maxN} associé, déclenche le compteur 130 (étape 305), exécute la commande APDU XN (étape 310) sans envoyer la réponse APDU YN correspondante, puis calcule le temps restant disponible T_{dispo} (étapes 315, 320). Dans l'exemple, le temps disponible T_{dispo} permet au sélecteur 156 de sélectionner les deux dernières opérations élémentaires d'OP1 (OP1_n-1 et OP1_n) et l'opération élémentaire j d'OP2, notée OP2_j. Ces opérations élémentaires sont alors exécutées (étape 325). A l'expiration du temps alloué T_{maxN}, l'élément sécurisé 100 envoie la réponse APDU YN à la commande APDU XN.

A ce stade, l'exécution de l'opération principale OP1 est terminée car toutes ses opérations élémentaires ont été exécutées. Le résultat de l'opération principale peut alors être utilisé par l'élément sécurisé. Par exemple, ce dernier dispose d'un ou plusieurs nouveaux identifiants chiffrés, ou dispose de nouvelles zones mémoires recyclées.

Bien entendu, des commandes APDU ultérieures vont permettre de terminer l'exécution progressive d'OP2.

Les exemples qui précèdent ne sont que des modes de réalisation de l'invention.

## Revendications

1. Procédé de gestion de l'exécution d'une opération principale (OP1, OP2) par un élément sécurisé (100), le procédé étant **caractérisé en ce que** :
l'opération principale est formée d'une pluralité d'opérations élémentaires (OP1_1, OP1_2, OP1-n), et
le procédé comprend les étapes suivantes :
a. recevoir (300, 400), d'un équipement hôte, une commande (X, X1, X2, XN) au format Application Protocol Data Unit, APDU,
b. déclencher (305) un compteur temporel (130) lors de l'exécution de la commande APDU afin de déterminer une durée réelle de traitement de la commande APDU par l'élément sécurisé;
c. déterminer (320) si la durée réelle de traitement (T_{execution}) indiquée par le compteur temporel est inférieure à une durée prédéfinie (Tₘₐₓ) associée à la commande APDU ;
d. en cas de détermination positive, exécuter (325) une ou plusieurs desdites opérations élémentaires pendant le temps restant (T_{dispo}) de ladite durée prédéfinie ; et
e. envoyer (330) une réponse (Y, Y1, Y2, YN) à la commande APDU à destination de l'équipement hôte, postérieurement à l'étape d.

2. Procédé selon la revendication 1, dans lequel la réponse (Y, Y1, Y2, YN) à la commande est envoyée à l'expiration de la durée prédéfinie (Tₘₐₓ) associée à la commande APDU.

3. Procédé selon l'une des revendications précédentes, dans lequel le compteur temporel (130) est déclenché à réception (300, 400) de la commande APDU.

4. Procédé selon l'une des revendications précédentes, comprenant une pluralité d'itérations des étapes a. à d. de sorte à exécuter ladite pluralité d'opérations élémentaires formant l'opération principale.

5. Procédé selon l'une des revendications précédentes, comprenant postérieurement à l'envoi d'une réponse (Y, Y1, Y2, YN) à une commande APDU reçue et préalablement à la réception d'une commande APDU suivante (X, X1, X2, XN), l'exécution additionnelle (455) d'une ou plusieurs desdites opérations élémentaires.

6. Procédé selon la revendication précédente, dans lequel l'exécution additionnelle d'une ou plusieurs desdites opérations élémentaires comprend l'exécution successive d'une ou plusieurs opérations élémentaires jusqu'à réception de la commande APDU suivante.

7. Procédé selon l'une des revendications 1 à 6, dans lequel l'opération principale (OP1, OP2) est prédécoupée en ladite pluralité d'opérations élémentaires (OP1_1, OP1_2, OP1_n), chacune étant associée à une durée de traitement élémentaire (Tₑₛₜᵢₘ), et
l'étape d. comprend la sélection des une ou plusieurs desdites opérations élémentaires à exécuter en fonction de leurs durées de traitement élémentaire associées et dudit temps restant (T_{dispo}).

8. Procédé selon la revendication précédente, dans lequel l'étape d. comprend l'exécution d'au moins deux opérations élémentaires provenant d'au moins deux opérations principales distinctes.

9. Procédé selon l'une des revendications 1 à 6, dans lequel l'étape d. comprend la poursuite d'une exécution de l'opération principale depuis un point de suspension précédent, ladite exécution de l'opération principale étant suspendue à un point de suspension suivant qui est fonction du temps restant.

10. Elément sécurisé (100) configuré pour exécuter une opération principale (OP1, OP2) formée d'une pluralité d'opérations élémentaires (OP1_1, OP1_2, OP1_n), l'élément sécurisé comprenant un processeur configuré pour :
a. recevoir, d'un équipement hôte, une commande (X, X1, X2, XN) au format Application Protocol Data Unit, APDU,
b. déclencher un compteur temporel (130) lors de l'exécution de la commande APDU afin de déterminer une durée réelle de traitement de la commande APDU par l'élément sécurisé ;
c. déterminer si la durée réelle de traitement (T_{execution}) indiquée par le compteur temporel est inférieure à une durée prédéfinie (Tₘₐₓ) associée à la commande APDU ;
d. en cas de détermination positive, exécuter une ou plusieurs desdites opérations élémentaires pendant le temps restant (T_{dispo}) de ladite durée prédéfinie ; et
e. envoyer une réponse (Y, Y1, Y2, YN) à la commande APDU à destination de l'équipement hôte, postérieurement à l'étape d.

11. Support non transitoire lisible par ordinateur stockant un programme d'ordinateur qui, lorsqu'il est exécuté par un élément sécurisé muni d'un processeur, amène l'élément sécurisé à effectuer le procédé selon l'une des revendications 1 à 9.

## Patentansprüche

1. Verfahren zur Steuerung der Ausführung einer Hauptoperation (OP1, OP2) durch ein sicheres Element (100), wobei das Verfahren **dadurch gekennzeichnet ist, dass**:
die Hauptoperation aus einer Vielzahl von elementaren Operationen (OP1_1, OP1_2, OP1-n) gebildet ist, und
das Verfahren die folgenden Schritte umfasst:
a. Empfangen (300, 400) eines Befehls (X, X1, X2, XN) im Application Protocol Data Unit-Format, APDU, von einem Host-Gerät,
b. Auslösen (305) eines Zeitzählers (130) bei der Ausführung des APDU-Befehls, um eine tatsächliche Verarbeitungsdauer des APDU-Befehls durch das sichere Element zu bestimmen;
c. Bestimmen (320), ob die von dem Zeitzähler angezeigte tatsächliche Verarbeitungsdauer (T_{Ausführung}) kürzer ist als eine vordefinierte Dauer (Tₘₐₓ), die dem APDU-Befehl zugeordnet ist;
d. bei positiver Bestimmung, Ausführen (325) einer oder mehrerer der genannten elementaren Operationen während der verbleibenden Zeit (T_{verbl}) der genannten vordefinierten Dauer; und
e. Senden (330) einer Antwort (Y, Y1, Y2, YN) an den APDU-Befehl für das Host-Gerät nach Schritt d.

2. Verfahren nach Anspruch 1, bei dem die Antwort (Y, Y1, Y2, YN) auf den Befehl nach Ablauf der vordefinierten Dauer (Tₘₐₓ) gesendet wird, die dem APDU-Befehl zugeordnet ist.

3. Verfahren nach einem der vorhergehenden Ansprüche, bei dem der Zeitzähler (130) bei Empfang (300, 400) des APDU-Befehls ausgelöst wird.

4. Verfahren nach einem der vorhergehenden Ansprüche, das eine Vielzahl von Iterationen der Schritte a. bis d. umfasst, um die Vielzahl von elementaren Operationen auszuführen, die die Hauptoperation bilden.

5. Verfahren nach einem der vorhergehenden Ansprüche, das nach dem Versand einer Antwort (Y, Y1, Y2, YN) auf einen empfangenen APDU-Befehl und vor dem Empfang eines folgenden APDU-Befehls (X, X1, X2, XN) die zusätzliche Ausführung (455) einer oder mehrerer der genannten elementaren Operationen umfasst.

6. Verfahren nach dem vorhergehenden Anspruch, bei dem die zusätzliche Ausführung einer oder mehrerer der genannten elementaren Operationen die sukzessive Ausführung einer oder mehrerer elementarer Operationen bis zum Empfang des nächsten APDU-Befehls umfasst.

7. Verfahren nach einem der Ansprüche 1 bis 6, bei dem die Hauptoperation (OP1, OP2) in die Vielzahl von elementaren Operationen (OP1_1, OP1_2, OP1_n) unterteilt wird, wobei jeder eine elementare Verarbeitungszeit (Tₑₛₜᵢₘ) zugeordnet ist, und
Schritt d. die Auswahl einer oder mehrerer der genannten elementaren Operationen umfasst, die in Abhängigkeit von ihrer zugeordneten elementaren Verarbeitungsdauer und der genannten verbleibenden Zeit (T_{verbl}) auszuführen sind.

8. Verfahren nach dem vorhergehenden Anspruch, bei dem Schritt d. die Ausführung von mindestens zwei elementaren Operationen umfasst, die aus mindestens zwei unterschiedlichen Hauptoperationen stammen.

9. Verfahren nach einem der Ansprüche 1 bis 6, bei dem der Schritt d. die Fortsetzung einer Ausführung der Hauptoperation von einem vorherigen Aussetzungspunkt aus umfasst, wobei die Ausführung der Hauptoperation an einem nächsten Aussetzungspunkt ausgesetzt wird, der von der verbleibenden Zeit abhängt.

10. Sicheres Element (100), das konfiguriert ist, um eine Hauptoperation (OP1, OP2) auszuführen, die aus einer Vielzahl von elementaren Operationen (OP1_1, OP1_2, OP1_n) gebildet ist, wobei das sichere Element einen Prozessor umfasst, der konfiguriert ist, um:
a. von einem Host-Gerät einen Befehl (X, X1, X2, XN) im Application Protocol Data Unit-Format, APDU, zu empfangen,
b. einen Zeitzähler (130) bei der Ausführung des APDU-Befehls auszulösen, um eine tatsächliche Verarbeitungsdauer des APDU-Befehls durch das sichere Element zu bestimmen;
c. zu bestimmen, ob die von dem Zeitzähler angegebene tatsächliche Verarbeitungszeit (T_{Ausführung}) kürzer ist als eine dem APDU-Befehl zugeordnete vordefinierte Zeit (Tₘₐₓ);
d. im Falle einer positiven Bestimmung, eine oder mehrere der genannten elementaren Operationen während der verbleibenden Zeit (T_{verbl}) der genannten vordefinierten Zeit auszuführen; und
e. nach Schritt d eine Antwort (Y, Y1, Y2, YN) an den APDU-Befehl für das Host-Gerät zu senden.

11. Nichtflüchtiger, computerlesbarer Datenträger, der ein Computerprogramm speichert, das, wenn es von einem sicheren Element, das mit einem Prozessor versehen ist, ausgeführt wird, das sichere Element veranlasst, das Verfahren nach einem der Ansprüche 1 bis 9 auszuführen.

## Claims

1. Method for managing the execution of a main operation (OP1, OP2) by a secure element (100), the method being **characterized in that**:
the main operation is formed of a plurality of elementary operations (OP1_1, OP1_2, OP1-n), and
the method comprises the following steps:
a. receiving (300, 400), from a host equipment, a command (X, X1, X2, XN) in the Application Protocol Data Unit, APDU, format,
b. triggering (305) a time counter (130) when the APDU command is executed in order to determine an actual processing duration for the secure element to process the APDU command;
c. determining (320) whether the actual processing duration (T_{execution}) indicated by the time counter is less than a predefined duration (Tₘₐₓ) associated with the APDU command;
d. in the event of a positive determination, executing (325) one or more of said elementary operations during the remaining time (Tₐᵥₐᵢₗ) of said predefined duration; and
e. sending (330) a response (Y, Y1, Y2, YN) to the APDU command to the host equipment after step d.

2. Method according to Claim 1, wherein the response (Y, Y1, Y2, YN) to the command is sent upon expiry of the predefined duration (Tₘₐₓ) associated with the APDU command.

3. Method according to either of the preceding claims, wherein the time counter (130) is triggered upon receipt (300, 400) of the APDU command.

4. Method according to one of the preceding claims, comprising a plurality of iterations of steps a. to d. so as to execute said plurality of elementary operations forming the main operation.

5. Method according to one of the preceding claims, comprising, after sending a response (Y, Y1, Y2, YN) to a received APDU command and before receiving a following APDU command (X, X1, X2, XN), additionally executing (455) one or more of said elementary operations.

6. Method according to the preceding claim, wherein the additional execution of one or more of said elementary operations comprises successively executing one or more elementary operations until the following APDU command is received.

7. Method according to one of Claims 1 to 6, wherein the main operation (OP1, OP2) is predivided into said plurality of elementary operations (OP1_1, OP1_2, OP1_n), each being associated with an elementary processing duration (Tₑₛₜᵢₘ), and
step d. comprises selecting the one or more of said elementary operations to be executed on the basis of their associated elementary processing durations and said remaining time (Tₐᵥₐᵢₗ).

8. Method according to the preceding claim, wherein step d. comprises executing at least two elementary operations originating from at least two distinct main operations.

9. Method according to one of Claims 1 to 6, wherein step d. comprises continuing to execute the main operation from a previous suspension point, said execution of the main operation being suspended at a following suspension point that depends on the remaining time.

10. Secure element (100) configured to execute a main operation (OP1, OP2) formed of a plurality of elementary operations (OP1_1, OP1_2, OP1_n), the secure element comprising a processor configured to:
a. receive, from a host equipment, a command (X, X1, X2, XN) in the Application Protocol Data Unit, APDU, format,
b. trigger a time counter (130) when the APDU command is executed in order to determine an actual duration for the secure element to process the APDU command;
c. determine whether the actual processing duration (T_{execution}) indicated by the time counter is less than a predefined duration (Tₘₐₓ) associated with the APDU command;
d. in the event of a positive determination, execute one or more of said elementary operations during the remaining time (Tₐᵥₐᵢₗ) of said predefined duration; and
e. send a response (Y, Y1, Y2, YN) to the APDU command to the host equipment after step d.

11. Non-transient computer-readable medium storing a computer program that, when it is executed by a secure element equipped with a processor, causes the secure element to perform the method according to one of Claims 1 to 9.
